# EUROPEAN PATENT SPECIFICATION

(11) **EP 3 006 642 B1**
(45) Date of publication and mention of the grant of the patent: **12.05.2021**
(21) Application number: 15188867.4
(22) Date of filing: 08.10.2015
(51) Int. Cl.: B32B 5/18, B32B 7/12, B32B 9/02, B32B 15/18, B32B 27/30, B32B 27/40, B32B 3/02, B32B 3/30, E04F 13/08, E04C 2/284, E04B 1/76, B32B 3/26, E04F 13/04

(54) **BUILDING PANELS COMPRISING A CONSTRUCTION PLATE AND A MESH STRUCTURE AND PROCESS FOR MANUFACTURING THE BUILDING PANEL**
BAUPANEEL AUS EINER KONSTRUKTIONSPLATTE UND EINEM GITTERNETZ UND METHODE ZUM HERSTELLEN DES BAUPANEELS
PANNEAUX AVEC UNE PLATE DE CONSTRUCTION ET UN FILET ET PROCÉDÉ DE FABRIQUER CE PANNEAU

(30) Priority: 08.10.2014 EP 14188122
(43) Date of publication of application: 13.04.2016
(73) Proprietor: GAMORINE NV, 8300 Knokke-Heist (BE)
(72) Inventor: Vereecke, Thierry, 8500 Kortrijk (BE)
(74) Representative: Lesthaeghe, David

(56) References cited:
- EP-A1- 2 388 134
- WO-A1-2007/029105
- WO-A1-2010/026267
- WO-A1-2012/031674
- FR-A1- 2 961 833
- JP-B1- 3 710 808

## Description

### FIELD OF THE INVENTION

The invention relates to building panels comprising a construction plate onto which a mesh structure is attached, wherein the mesh structure provides in an extension structure projecting beyond two adjacent or consecutive edges of the construction plate, the extension structure comprising at least two recesses located at two of the three corners of the extension structure. The invention also relates to the process for manufacturing the building panel and a method for the modular construction of a building structure with the building panel.

### BACKGROUND OF THE INVENTION

In construction, several building tools are available for the renovation of exterior walls. Typically when renovating an exterior wall, it is the intention to not only renew the appearance of the structure but also to improve characteristics such as the heat insulation. Also, the cost of the building tools is of importance. Therefore, often modular building panels are used. Typically the building panels are positioned in front of the wall that requires the renovation. The panels are even anchored to the wall and arranged adjacent to one another to form a continuous covering. The building panels are made of a heat insulating material and, after placement of the building panels, a netting structure is fixed onto the panels using a binder layer. The netting structure is used to cover the seams between the panels, thereby reinforcing the overall structure. When the netting structure is in place, a finishing layer is applied. The finishing layer can be further worked to obtain a desired finish, such as smoothing and coloring. Pre-fabricated building panels which already contain the netting structure are also already available. However, with the available pre-fabricated building panels it is often seen that it is difficult to obtain a smooth and high-quality finishing of the structure due to the large amount of overlap between the netting structures of the building panels. Indeed, in the panels of the prior art, a netting structure is attached to building panel, the netting structure typically being larger compared to the size of the building panel. As a result, netting structures of adjacent building panels need to be removed during construction in order to avoid anomalies of the netting structures at the seams. This requires a considerable time to perform all of these operations, or at any rate a considerable use of manpower, leading to high realization costs.

Another issue occurs when netting structures of adjacent panels overlap with each other (something which is difficult to avoid with the currently available building panels). In the region of overlap, issues occur with the attachment of the netting structure and often it is seen that the netting structure at the overlaps is not attached firmly. As a result, these regions of the building structure are prone to thermal tension and pose issues with resistance to frost. It is for instance typically seen that at the overlapping regions the binder/finishing layer detaches more quickly, thereby reducing the quality and solidity of the construction. Also, regions where the netting structures overlap with each other are more difficult to level out with the other parts of the wall and therefore require more time and effort for their placement.

WO 2007/029105 describes a system for cladding building structures, comprising a plurality of prefabricated panels adapted to be arranged adjacent to one another and in reciprocal contact, and means for fixing the prefabricated panels to the building structure, in order to form a modular cladding.

EP 2 388 134 describes a modular insulation system comprising at least one insulation tile comprising multiple layers, at least one of said layers being a layer of an insulating material, another layer being an upper surface layer comprising a structural net embedded in a first adhesive hardening compound, whereby the structural net extends from the upper surface layer of the insulation tile outside a surface area of the tile, thus forming protruding net parts, the protruding net parts being capable of interacting with the upper surface layer of an adjacent insulation tile.

JP 3 710 808 describes a panel-like thermal insulation material and a mesh material stuck to a surface of the thermal insulation material; wherein the mesh material is provided with an extended part having larger surface area than that of the thermal insulation material and extending from a fringe part of the thermal insulation material; wherein the extended parts of adjacent members for construction are mutually overlapped; wherein the overlapped mesh materials are folded on a surface of the member for construction on one side; and wherein a mixture of resin and cement is applied on the surface to join adjacent thermal insulation materials without using the mesh material for connection.

### SUMMARY OF THE INVENTION

The present invention provides in a building panel (1) comprising a construction plate (2) and a mesh structure (3) attached to the construction plate (2) with a binder material (4,5).

According to a first aspect of the invention, there is provided a building panel (1) comprising a construction plate (2) and a mesh structure (3) attached to the construction plate (2) with a binder material (4,5). Preferably, the building panel (1) is characterized in that the mesh structure (3) provides an extension structure comprising a first overhang (10) and a second overhang (11) projecting beyond two adjacent edges of said construction plate (2), wherein said extension structure comprises a first recess (12) and a second recess (13) located at one or both extremities of the first and/or second overhangs (10,11), such that the first overhang (10) and/or the second overhang (11) does not extend over the entire size of the construction plate (2), wherein the length (20) of the first recess (12) is equal to the width (21) of the second overhang (11) within a margin of +100% and -50%, and wherein the length (22) of the second recess (13) is equal to the width (23) of the first overhang (10) within a margin of +100% and -50%.

In some embodiments, the building panel (1) comprises two layers of binder material, a first layer of binder material (4) attached to the construction plate (2) onto which the mesh structure (3) is positioned and a second layer of binder material (5) covering at least part of the mesh structure (3).

In some embodiments, the layer of binder material (4,5) comprises one or more cavities (6) for applying fixing means, preferably wherein the mesh structure (3) comprises the same cavities (6).

In some embodiments, the binder material is a viscous resin typically used in contrition work, preferably selected from cement, grout, plaster, polymeric adhesive, polymeric cement, or a mixture thereof.

In some embodiments, the mesh structure is a flexible lattice structure typically used in construction work, preferably made from a metallic, polymeric or plastic material and preferably chosen from fiberglass, galvanized steel, or stainless steel.

In some embodiments, the construction plate (2) is made from an insulating material typically used in construction work, preferably selected from a group comprising polystyrene, polyurethane, cork, foam glass, wood fiber, a mineral wool, or combinations thereof.

In some embodiments, the first layer of binder material (4) essentially covers the entire surface of the construction plate (2) and the second layer of binder material (5) covers only part of the mesh structure (3), wherein the area of the building panel devoid of the second layer of binder material (5) corresponds to a band along the two adjacent edges of the construction plate (2) where no overhang mesh structure is positioned.

In some embodiments, the width of the band devoid of the second layer of binder material (5) is equal to the width (21) of the overhang (10,11) within a margin of +100% and -50% positioned on the opposite side of the building panel (1).

In some embodiments, the construction plate (2) in plan view provides in a substantially rectangular shape.

In some embodiments, the first layer of binder material (4) and the second layer of binder material (5) are similar types of binder materials, optionally identical binder materials.

According to a second aspect of the invention, there is provided the use of the building panel (1) according to the first aspect of the invention, for modular construction.

According to a third aspect of the invention, there is provided a modular construction system comprising three or more building panels (1) according to the first aspect of the invention.

In some preferred embodiments, the first overhang (10) of the first building panel (1) covers at least part of the juxtaposed second building panel, and the second overhang (11) of the first building panel (1) covers at least part of the superposed third building panel.

According to a fourth aspect of the invention, there is provided a process for manufacturing a building panel (1) according to the first aspect of the invention.

In some preferred embodiments, the method comprises the steps of:
(a) preparing a construction plate (2) and a mesh structure (3) as defined according to the first aspect;
(b) optionally applying a binder layer (4) onto said construction plate (2);
(c) positioning said mesh structure (3) onto the construction plate (2) such that a first overhang (10) and/or a second overhang (11) of the mesh structure (3) does not extend over the entire size of the construction plate (2); wherein the length (20) of the first recess (12) is equal to the width (21) of the second overhang (11) within a margin of +100% and - 50%, and wherein the length (22) of the second recess (13) is equal to the width (23) of the first overhang (10) within a margin of +100% and -50%; and;
(d) optionally applying a binder layer (5) onto at least part of said mesh structure (3); thereby manufacturing a building panel (1);
wherein said method comprises at least one of steps (b) or (d).

In some preferred embodiments, a first binder layer (4) is applied prior to applying the mesh structure (3), while a second binder layer (5) is applied after applying the mesh structure (3).

According to a fifth aspect of the invention, there is provided a method for the modular construction of a building structure, preferably using the modular construction system according to the third aspect of the invention.

In some preferred embodiments, the method comprises the steps of:
- preparing or providing a plurality of building panels (1) according to the first aspect of the invention;
- arranging said building panels (1) in reciprocal contact with each other;
- covering juxtaposed and superposed panels with the first and second overhangs (10,11) of the adjacent building panels (1); and
- applying a binder layer onto the first and second overhangs (10,11) covering the juxtaposed and superposed panels, thereby construing a building structure.

### BRIEF DESCRIPTION OF THE DRAWINGS

Embodiments of the present invention will now be described, by way of example only, with reference to the accompanying drawings, in which:

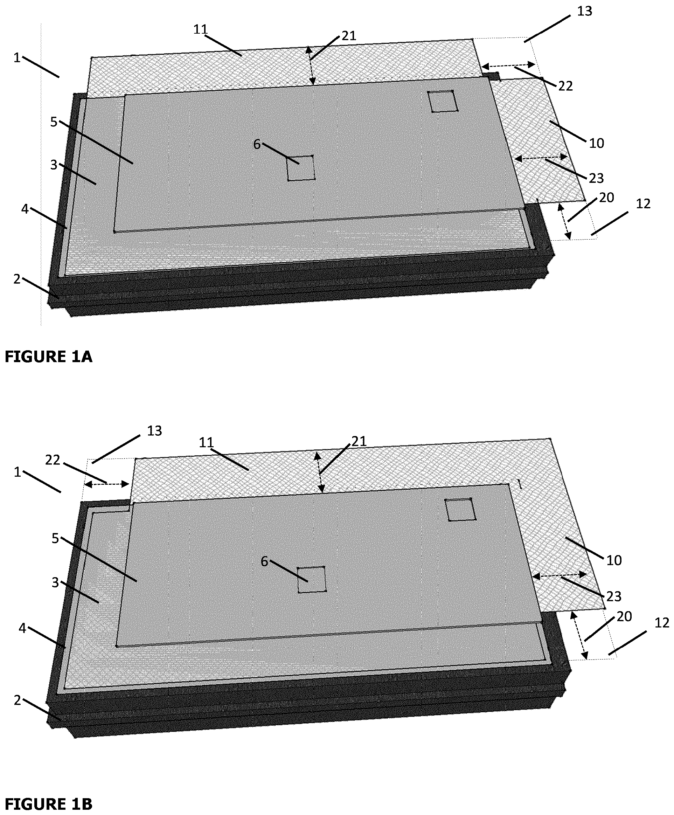

**FIG. 1A** depicts an illustration of one of the embodiments of the present invention.
**FIG. 1B** depicts an illustration of one of the embodiments of the present invention.

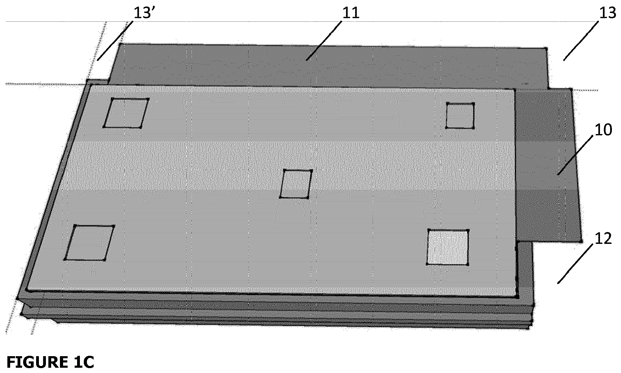

**FIG. 1C** depicts an illustration of one of the embodiments which is not part of the present invention

### DETAILED DESCRIPTION OF THE INVENTION

The present invention aims to provide building panels which solve one or more of the aforementioned disadvantages. Preferred embodiments of the present invention aim to provide building panels which solve one or more of the aforementioned disadvantages. The present invention also aims to provide methods for manufacturing and placing the building panels and the use of the building panels in construction, thereby solving one or more of the aforementioned disadvantages. Preferred embodiments of the present invention aim to provide methods for manufacturing and placing the building panels and the use of the building panels in construction, thereby solving one or more of the aforementioned disadvantages.

To solve one or more of the above-described problems, at least one embodiment of the present invention adopts the following constructions as illustrated in the embodiments described below, some of which are also illustrated by the drawings. However, parenthesized or emboldened reference numerals affixed to respective elements merely exemplify the elements by way of example, with which it is not intended to limit the respective elements.

Before the present system and method of the invention are described, it is to be understood that this invention is not limited to particular systems and methods or combinations described, since such systems and methods and combinations may, of course, vary. It is also to be understood that the terminology used herein is not intended to be limiting, since the scope of the present invention will be limited only by the appended claims.

As used herein, the singular forms "a", "an", and "the" include both singular and plural referents unless the context clearly dictates otherwise.

The terms "comprising", "comprises" and "comprised of" as used herein are synonymous with "including", "includes" or "containing", "contains", and are inclusive or open-ended and do not exclude additional, non-recited members, elements or method steps. It will be appreciated that the terms "comprising", "comprises" and "comprised of" as used herein comprise the terms "consisting of", "consists" and "consists of".

The recitation of numerical ranges by endpoints includes all numbers and fractions subsumed within the respective ranges, as well as the recited endpoints.

Whereas the terms "one or more" or "at least one", such as one or more or at least one member(s) of a group of members, is clear *per se,* by means of further exemplification, the term encompasses *inter alia* a reference to any one of said members, or to any two or more of said members, such as, *e.g.,* any ≥3, ≥4, ≥5, ≥6 or ≥7 etc. of said members, and up to all said members.

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

In the following detailed description of the invention, reference is made to the accompanying drawings that form a part hereof, and in which are shown by way of illustration only of specific embodiments in which the invention may be practiced. The following detailed description, therefore, is not to be taken in a limiting sense.

The present invention provides in building panels comprising a construction plate onto which a mesh structure is attached, wherein the mesh structure provides in an extension structure projecting beyond two adjacent or consecutive edges of the construction plate, the extension structure comprising at least two recesses located at two of the three corners of the extension structure. It has been found that by providing such building panels, the ease-of-use of the panels upon construction can be improved drastically. The panels no longer require additional processes where the mesh structure is cut and removed or repositioned during construction.

Also, the process of assembling the panels to for a larger structure generally comprises a stage where a base mixture of mortar is laid on the insulation panels. Normally this is followed by sanding the mortar and applying one or more finishing layers, thereby giving the structure a definitive outlook. The present invention provides in the application of the subsequent layers in a more efficient manner and also anomalies are avoided. The thickness of the subsequent layers can be reduced as well, because there are no height differences in the construction wall, thereby reducing the amount of material required and increasing the speed at which it can be applied. It is also observed that the finished construction wall is also more durable and more resistant to thermal variations and infiltration of water.

Therefore, a first aspect of the invention provides in a building panel (1) comprising a construction plate (2) and a mesh structure (3) attached to the construction plate (2) with a binder material (4,5), characterized in that the mesh structure (3) provides an extension structure comprising a first overhang (10) and a second overhang (11) projecting beyond two adjacent edges of said construction plate (2), wherein said extension structure comprises a first recess (12) and a second recess (13) located at one or both extremities of the first and/or second overhangs (10,11), such that the first overhang (10) and/or the second overhang (11) does not extend over the entire size of the construction plate (2), wherein the length (20) of the first recess (12) is equal to the width (21) of the second overhang (11) within a margin of +100% and -50%, and wherein the length (22) of the second recess (13) is equal to the width (23) of the first overhang (10) within a margin of +100% and -50%. Preferably said margin is between +80% and -44%, more preferably between +60% and -38% and more preferably between +50% and -33%. The margins allow that during the positioning of the building blocks the amount of spaces devoid of mesh structure or the amount of spaces with overlapping mesh structures are minimized and do not jeopardize the structural integrity of the structure.

In a preferred embodiment, there is a variation between the length (20) of the first recess (12) and the width (21) of the second overhang (11) or the length (22) of the second recess (13) and the width (23) of the first overhang (10) is 100% or smaller, 90% or smaller, 80% or smaller, 70% or smaller, 60% or smaller, 50 % or smaller, preferably 40 % or smaller, preferably 30 % or smaller, preferably 25 % or smaller, preferably 20 % or smaller, preferably 15 % or smaller, 10 % or smaller, preferably 9 % or smaller, preferably 8 % or smaller, preferably 7 % or smaller, preferably 6 % or smaller, preferably 5 % or smaller, preferably 4 % or smaller, preferably 3 % or smaller, preferably 2.5 % or smaller, preferably 2 % or smaller, preferably 1 % or smaller. More preferably the length (20) of the first recess (12) is approximately equal to the width (21) of the second overhang (11) and the length (22) of the second recess (13) is approximately equal to the width (23) of the first overhang (10).

In some preferred embodiments, the length (20) of the first recess (12) is equal to the width (21) of the second overhang (11) within a margin of +100% and -50%, preferably within a margin of +80% and -44%, preferably within a margin of +60% and -38%, preferably within a margin of +50% and -33%, preferably within a margin of +40% and - 29%, preferably within a margin of +30% and -23%, preferably within a margin of +20% and -17%, preferably within a margin of +15% and -13%, preferably within a margin of +10% and -9%, preferably within a margin of +5% and -5%, preferably within a margin of +2% and -2%, preferably within a margin of +1% and -1%.

In some preferred embodiments, the length (20) of the second recess (13) is equal to the width (23) of the first overhang (10) within a margin of +100% and -50%, preferably within a margin of +80% and -44%, preferably within a margin of +60% and -38%, preferably within a margin of +50% and -33%, preferably within a margin of +40% and -29%, preferably within a margin of +30% and -23%, preferably within a margin of +20% and - 17%, preferably within a margin of +15% and -13%, preferably within a margin of +10% and -9%, preferably within a margin of +5% and -5%, preferably within a margin of +2% and -2%, preferably within a margin of +1% and -1%.

In some preferred embodiments, the length (20) of the first recess (12) is equal to the width (21) of the second overhang (11) and the length (20) of the second recess (13) is equal to the width (23) of the first overhang (10), the lengths being equal within a margin of +100% and -50%, preferably within a margin of +80% and -44%, preferably within a margin of +60% and -38%, preferably within a margin of +50% and -33%, preferably within a margin of +40% and -29%, preferably within a margin of +30% and -23%, preferably within a margin of +20% and -17%, preferably within a margin of +15% and - 13%, preferably within a margin of +10% and -9%, preferably within a margin of +5% and -5%, preferably within a margin of +2% and -2%, preferably within a margin of +1% and - 1%.

In particular embodiments, where the length of the recess is smaller than the width of the overhang, the extension structure may comprise a third recess located at the first and/or second overhangs.

By providing building panels according to the above, construction structures can be realized more rapidly as superfluous processing steps are no longer required. Accordingly, the present invention shortens the working times and expenditure of manpower, and therefore reduces the building costs.

As referred to herein, the term "building panel" refers to solid plates which are preferably prefabricated panels of a modular building system. The building panels are typically positioned in front of a building structure which requires, for instance, renovation. This building structure may be an interior or exterior wall, floor, ceiling or roof. The building panels are arranged in front of the building structure and typically in a side-by-side arrangement, in reciprocal contact with each other. In order to improve the ease-of-use, the building panels may exhibit one or more projecting ribs along two consecutive sides of the panel and a receiving channel running along the two remaining sides of the building panel, the receiving channel having a profile matching or corresponding with the projecting ribs. When the building panels are arranged in a side-by-side manner, the receiving channel of each building panel receives the projecting rib of another, adjacent building panel, thereby providing the building structure with a structural continuity, improved stability as well as ease-of-use.

As referred to herein, the term "construction plate" refers to a plate made from a material typically used in construction. The construction plate typically provides to the building panels the insulation characteristics as well as the structural stability. The construction plate is typically a flat plate and exhibiting preferably a substantially rectangular plan shape. This allows for the easy side-by-side arrangement of the panels. In this context, the term "edge of the construction plate" refers to one of the sides of the rectangular shaped construction plate. The construction plates are preferably made from a light material further exhibiting good mechanical characteristics in order to be able to support its own weight and the weight of the materials attached to it.

In a preferred embodiment according to the present invention, the construction plate in plan view provides in a substantially rectangular shape.

Preferably, the construction plate is made from a material, preferably an insulating material, typically used in construction work, preferably selected from a group comprising polystyrene, polyurethane or cork, more preferably polystyrene. Suitable materials may also comprise foam glass, wood fiber, or a mineral wool, such as glass wool, stone wool, and ceramic fiber wool. In a preferred embodiment, the construction plate comprises or consists of expanded polystyrene or polyurethane pellets or beads.

Furthermore, the construction plate is preferably made from a material having a density comprised between 5 and 40 kg/m³, preferably between 10 and 35 kg/m³, more preferably between 15 and 30 kg/m³, for example between 20 and 25 kg/m³. The density of the material can be measured by simply dividing the weight by the volume, preferably after a drying step of a couple of days in a drying oven at 70 °C to remove any residual humidity. The dimensions of the construction plate can vary depending on the application. Preferably the construction plate has a thickness comprised between 20 mm and 500 mm, preferably comprised between 70 mm and 250 mm, more preferably comprised between 100 mm and 200 mm. In some embodiments, the construction plate has a thickness comprised between 20 mm and 70 mm. In some embodiments, the construction plate has a thickness comprised between 250 mm and 500 mm. Preferably the construction plate has a width comprised between 200 mm and 1000 mm, more preferably comprised between 300 mm and 800 mm, more preferably comprised between 400 mm and 600 mm and more preferably about 500 mm. Preferably the construction plate has a length comprised between 400 mm and 2500 mm, more preferably comprised between 600 mm and 1500 mm, more preferably comprised between 800 mm and 1200 mm and more preferably about 1000 mm. For example, the construction plate may have a width of about 500 mm and a length of about 1000 mm, or the construction plate may have a width of about 600 mm and a length of about 1200 mm.

By providing building panels comprising construction plates having the above characteristics, the building panels are found to be sufficiently strong to give the building structure good structural characteristics while remaining light enough to provide in an easy handling.

As referred to herein, the term "mesh structure" refers to a netting structure typically made from a framework which contains a regular, repeating pattern, wherein the pattern can be defined by a certain unit cell. The cell unit is preferably a two-dimensional cell having a round, triangular, rectangular square or other shape. A unit cell is the simplest repeat unit of the pattern. Thus, the lattice structure is defined by a plurality of unit cells. The unit cell size determines, among other factors such as material choice and unit cell geometry, the rigidity (stiffness) and transparency of the mesh structure. Larger unit cells generally decrease rigidity and increase transparency, while smaller unit cells typically increase rigidity and decrease transparency. Local variations in the unit cell geometry and/or unit cell size may occur, in order to provide regions with a certain stiffness. Therefore, the mesh may comprise one or more repeated unit cells and one or more unique unit cells. The mesh structure typically functions as a reinforcement element laying on top of the construction plates and at least partially covering two or more construction plates.

In a preferred embodiment, the mesh structure is a flexible lattice structure typically used in construction work, preferably made from a metallic, polymeric or plastic material and preferably chosen from fiberglass, galvanized steel, or stainless steel.

The mesh structure provides to the building blocks a mechanical and structural reinforcement with regard to the adjacent building blocks. The mesh overlaps partially with adjacent building blocks and therefore stabilizes and ensures the structural stability of the seams between the panels.

As referred to herein, the term "binder material" refers to a material typically used in construction which provides in the attachment of the mesh structure onto the construction plate. The binder material comprises preferably of a grout having characteristics of porosity, and a special glue, generally a transparent resin suitable for gripping onto the mesh structure and the construction plate. Typical binder materials are chosen from cement, preferably comprising Portland cement.

As used herein the term Portland cement is used for a cement comprising:
- 61-67% by weight Calcium oxide, CaO;
- 19-23% by weight Silicon dioxide, SiO₂;
- 2.5-6% by weight Aluminum oxide, Al₂O₃;
- 0-6% by weight Ferric oxide, Fe₂O₃; and
- 1.5-4.5% by weight sulfates.

In a preferred embodiment the binder material is a viscous resin typically used in construction work, preferably selected from cement, grout, plaster, polymeric adhesive, polymeric cement, or a mixture thereof.

As referred to herein, the term "extension structure" refers in general to the part of the mesh structure extending outside the borders of the construction plate. The extension structure is the part of the structure that will overlap with adjacent building panels upon constructing the building structure. In this context, the term "overhang" refers to the part projecting outwardly from a side of the construction plate. In this context, the term "width of the overhang" refers to distance to which the overhang extends from the construction plate.

In more detail, the extension structure provides overhangs projecting from two consecutive sides of the edge of the construction plate. When the building panels are arranged, the extension structure of each of the panels at least partially covers the adjacent panels.

As referred to herein, the term "recess" refers to a discontinuation in the overhang. According to the invention, the overhang does not extent over the entire size of the construction plate. The recess provides a break in the overhang. In this context, the term "length of the recess" refers to length of the hole in the overhang.

According to the present invention, the extension structure comprises a first and a second recess located at one or both extremities of the first and/or second overhangs. In a particular embodiment, the first and second recesses are located at the edges of the overhang on the shortest side of the building panel (first overhang). In an alternative embodiment, the first and second recesses are located at the edges of the overhang on the longest side of the building panel (second overhang). In an alternative embodiment, the first recess is located at the edge of the overhang on the shortest side of the building panel (first overhang) which is not mutual with the second overhang, and the second recess is located at the edge of the overhang on the longest side of the building panel (second overhang) which is not mutual with the first overhang.

Accordingly, the extension structure is an L-shaped structure comprising two legs (overhangs) positioned perpendicular to each other, the legs contacting each other at their proximal region and extending in perpendicular directions to their distal regions. The present invention provides in at least two recesses in the extension structure, wherein, if the first recess is positioned at the distal region of the first leg or overhang, the second recess is positioned at either one of the proximal region of the first leg or overhang (and thus also the proximal region of the second leg or overhang) or the distal region of the second leg or overhang. If the first recess is positioned at the distal region of the second leg or overhang, the second recess is positioned at either one of the proximal region of the second leg or overhang (and thus also the proximal region of the first leg or overhang) or the distal region of the first leg or overhang.

In a preferred embodiment, the building panel (1) according to the present invention comprises two layers of binder material, a first layer of binder material (4) attached to the construction plate (2) onto which the mesh structure (3) is positioned and a second layer of binder material (5) covering at least part of the mesh structure (3).

By providing a first and a second layer of binder material, the attachment of the mesh structure can be ensured by the first binder material, while the second binder layer provides in a layer that is identical to the material that will be used to finally cover the building panel.

In a preferred embodiment said first layer of binder material (4) essentially covers the entire surface of the construction plate (2) and wherein the second layer of binder material (5) covers only part of the mesh structure (3), wherein the area of the building panel devoid of the second layer of binder material (5) corresponds to a band along the two adjacent edges of the construction plate (2) where no overhang mesh structure is positioned. In another preferred embodiment the width of said band devoid of the second layer of binder material (5) is equal to the width (21) of the overhang (10,11) within a margin of +100% and -50% positioned on the opposite side of the building panel (1).

In a preferred embodiment said first layer of binder material (4) and said second layer of binder material (5) are similar types of binder materials. In some embodiments, said first layer of binder material (4) and said second layer of binder material (5) are identical types of binder materials. In some embodiments, said first layer of binder material (4) and said second layer of binder material (5) are different types of binder materials. For example, said first layer of binder material (4) may comprise a polymeric cement, while said second layer of binder material (5) may comprise a non-polymeric cement. In some embodiments, said first layer of binder material (4) and said second layer of binder material (5) are similar types of binder materials, but with a different viscosity, for example two types of cement with a different viscosity.

Preferably, the layer of binder material (4,5) comprises one or more cavities (6) for applying fixing means. Often the building panels are attached to the underlying wall with fixing means such as anchoring elements. By providing cavities into which the anchoring elements can be positioned, the building panels remain flat and no thick finishing layers need to be applied to level out the panel. In some preferred embodiments, the cavities run through the mesh structure (3), preferably or possibly the mesh structure (3) comprises the same cavities (6). In some preferred embodiments, the cavities run through the mesh structure (3), preferably the cavities (6) in the mesh structure (3) are in the same location as the cavities (6) in the layer of binder material.

In preferred embodiments, the surface of the construction plate comprises a roughened surface. Generally, the roughened surface is obtained by roughening the surface of the construction plate by means of roughening means. Generally, the surface of the construction plate is roughened before binder material is applied to the surface of the construction plate. Also, the surface roughening process is generally adapted to roughen the surface of construction plates without substantially altering the bulk mechanical properties of the construction plate. A roughened surface can improve adhesion between the construction plate and the binder material.

In some embodiments, the roughened surface comprises scrub marks. Scrub marks on the roughened surface are obtained by scrubbing the surface of a construction plate, thereby creating surface roughness in the form of scrub marks.

In some embodiments, the roughened surface comprises puncture holes. Puncture holes may be obtained by rolling one or more spiked rollers over the surface of a construction plate, thereby creating surface roughness in the form of puncture holes.

In some embodiments, the roughened surface comprises shear stress marks. The term "shear stress marks" as used herein refers to a specific type of surface damage which is introduced by shear stresses at the construction plate's surface, wherein the shear stresses exceed the construction plate's yield stress at the plate's surface. In some embodiments, the shear stresses are applied on the construction plate by means of a stationary weight which exerts pressure on the construction plate while the plate is moved along a production line.

In a further aspect, the invention provides in the use of the building panel (1) according to the invention, for construction, and in particular modular construction.

As referred to herein, the term "modular construction" refers to a construction system where smaller building blocks are used to construct a larger structure.

In a further aspect, the invention provides in a modular construction system comprising three or more building panels (1) according to the present invention, wherein the first overhang (10) of the first building panel (1) covers at least part of the juxtaposed second building panel, and wherein the second overhang (11) of the first building panel (1) covers at least part of the superposed third building panel.

In particular, the invention provides a system for covering structures, the system comprising a plurality of prefabricated panels arranged adjacent to one another in reciprocal contact, and means for fastening for fixing the prefabricated panels to the building structure, in order to form a modular covering; each prefabricated panel comprising a construction plate preferably made of a heat insulating material, a mesh structure stretched and fixed on the plate, and a binder layer fixing the mesh structure to the plate.

Thanks to the above solution, the prefabricated panels can be made in a separate place using dedicated tools and manpower which enables a reduction in the production costs, while at the worksite the assembly of the panels only requires the laying of the prefabricated panels, thus considerably reducing necessary work-time.

In a further aspect, the invention provides in a process for manufacturing a building panel (1) as defined above, characterized in that said method comprises the steps of:
(a) preparing a construction plate (2) and a mesh structure (3) as defined above;
(b) optionally applying a binder layer (4) onto said construction plate (2);
(c) positioning said mesh structure (3) onto the construction plate (2) such that a first overhang (10) and/or a second overhang (11) of the mesh structure (3) does not extend over the entire size of the construction plate (2); wherein the length (20) of the first recess (12) is equal to the width (21) of the second overhang (11) within a margin of +100% and - 50%, and wherein the length (22) of the second recess (13) is equal to the width (23) of the first overhang (10) within a margin of +100% and -50%; and;
(d) optionally applying a binder layer (5) onto at least part of said mesh structure (3); thereby manufacturing a building panel (1);
wherein said method comprises at least one of steps (b) or (d).

In some embodiments, a frame is placed on the construction plate (2), over which a cart with binder may be moved while the construction plate (2) remains stationary. In some embodiments, the construction plate (2) is transported under a stationary container filled with binder.

In some embodiments, the binder layer (4) is applied prior to applying the mesh structure (3). In some embodiments, the binder layer (5) is applied after applying the mesh structure (3). In some preferred embodiments, a first binder layer (4) is applied prior to applying the mesh structure (3), while a second binder layer (5) is applied after applying the mesh structure (3).

In some embodiments, the mesh layer (3) is cut or punched in the desired shape prior to applying it to the construction plate (2). In some embodiments, the mesh layer (3) is cut or punched in the desired shape after applying it to the construction plate (2). In some embodiments, the mesh layer (3) is cut or punched in the desired shape prior to applying the binder layer (4). In some embodiments, the mesh layer (3) is cut or punched in the desired shape after applying the binder layer (5). In some embodiments, the mesh layer (3) is cut or punched in the desired shape after applying the binder layer (4), but prior to applying the binder layer (5).

Preferably, the method involves the step: roughening the surface of the construction plate using roughening means. Preferably, this step is executed before the execution of step c. When step b is executed, this step is preferably executed before the execution of step b. A roughened surface can improve adhesion between the construction plate and the binder material.

Generally, the surface roughening process is adapted to roughen the surface of construction plates without substantially altering the bulk mechanical properties of the construction plate.

In some embodiments, the roughened surface comprises scrub marks. Scrub marks on the roughened surface are obtained by scrubbing the surface of a construction plate, thereby creating surface roughness in the form of scrub marks.

In some embodiments, the roughened surface comprises puncture holes. Puncture holes may be obtained by rolling one or more spiked rollers over the surface of a construction plate, thereby creating surface roughness in the form of puncture holes.

In some embodiments, the roughened surface comprises shear stress marks. The term "shear stress marks" as used herein refers to a specific type of surface damage which is introduced by shear stresses at the construction plate's surface, wherein the shear stresses exceed the construction plate's yield stress at the plate's surface. In some embodiments, the shear stresses are applied on the construction plate by means of a stationary weight which exerts pressure on the construction plate while the plate is moved along a production line.

In a further aspect, the invention provides in a method for the modular construction of a building structure, comprising the steps of:
- preparing or providing a plurality of building panels (1) as defined hereabove;
- arranging said building panels (1) in reciprocal contact with each other;
- covering juxtaposed and superposed panels with the first and second overhangs (10,11) of the adjacent building panels (1); and
- applying a binder layer onto the first and second overhangs (10,11) covering the juxtaposed and superposed panels, thereby construing a building structure.

### EXAMPLES

The present example provides a particular embodiment according to the invention.

Figure 1 represents a building panel (1) comprising a construction plate (2) and a mesh structure (3) attached to the construction plate (2) with a binder material (4,5), wherein the mesh structure (3) provides an extension structure comprising a first overhang (10) and a second overhang (11) projecting beyond two adjacent edges of said construction plate (2), wherein said extension structure comprises a first recess (12) and a second recess (13) located at one or both extremities of the first and/or second overhangs (10,11), wherein the length (20) of the first recess (12) is equal to the width (21) of the second overhang (11), and wherein the length (22) of the second recess (13) is equal to the width (23) of the first overhang (10). Figures 1A and 1B illustrate two different combinations of the location of the recesses (12,13). Figure 1C shows a particular embodiment, which is not part of the invention, where the building panel comprises a construction plate and a mesh structure attached to the construction plate with a binder material, wherein the mesh structure provides an extension structure comprising a first overhang (10) and a second overhang (11) projecting beyond two adjacent edges of said construction plate, wherein said extension structure comprises a first recess (12), a second recess (13) and a third recess (13') located at both extremities of the first and second overhangs (10,11), wherein the length of the first recess (12) is equal to the width of the second overhang (11), and wherein the length of the second and third recesses (13 and 13') are each smaller than the width of the first overhang (10).

## Claims

1. A building panel (1) comprising a construction plate (2) and a mesh structure (3) attached to the construction plate (2) with a binder material (4,5) the mesh structure (3) provides an extension structure consisting of a first overhang (10) and a second overhang (11) projecting beyond two adjacent edges of said construction plate (2), wherein said extension structure comprises a first recess (12) and a second recess (13) located at one or both extremities of the first and/or second overhangs (10,11), such that the first overhang (10) and/or the second overhang (11) does not extend over the entire size of the construction plate (2), wherein the length (20) of the first recess (12) is equal to the width (21) of the second overhang (11) within a margin of +100% and -50%, and wherein the length (22) of the second recess (13) is equal to the width (23) of the first overhang (10) within a margin of +100% and -50%.

2. The building panel (1) according to claim 1, wherein said building panel (1) comprises two layers of binder material, a first layer of binder material (4) attached to the construction plate (2) onto which the mesh structure (3) is positioned and a second layer of binder material (5) covering at least part of the mesh structure (3).

3. The building panel (1) according to claim 1 or 2, wherein said layer of binder material (4,5) comprises one or more cavities (6) for applying fixing means, possibly wherein the mesh structure (3) comprises the same cavities (6).

4. The building panel (1) according to any of claims 1 to 3, wherein the binder material is a viscous resin typically used in construction work, preferably selected from cement, grout, plaster, polymeric adhesive, polymeric cement, or a mixture thereof.

5. The building panel (1) according to any of claims 1 to 4, wherein the mesh structure is a flexible lattice structure typically used in construction work, preferably made from a metallic, polymeric or plastic material and preferably chosen from fiberglass, galvanized steel, or stainless steel.

6. The building panel (1) according to any of claims 1 to 5, wherein the construction plate (2) is made from an insulating material typically used in construction work, preferably selected from a group comprising polystyrene, polyurethane, cork, foam glass, wood fiber, a mineral wool, or combinations thereof.

7. The building panel (1) according to any of claims 2 to 6, wherein said first layer of binder material (4) essentially covers the entire surface of the construction plate (2) and wherein the second layer of binder material (5) covers only part of the mesh structure (3), wherein the area of the building panel devoid of the second layer of binder material (5) corresponds to a band along the two adjacent edges of the construction plate (2) where no overhang mesh structure is positioned.

8. The building panel according to claim 7, wherein the width of said band devoid of the second layer of binder material (5) is equal to the width (21) of the overhang (10,11) within a margin of +100% and -50% positioned on the opposite side of the building panel (1).

9. The building panel (1) according to any of claims 1 to 8, wherein said construction plate (2) in plan view provides in a substantially rectangular shape.

10. The building panel (1) according to any of claims 1 to 9, wherein said first layer of binder material (4) and said second layer of binder material (5) are similar types of binder materials.

11. Use of the building panel (1) according to any of claims 1 to 10, for modular construction.

12. A modular construction system comprising three or more building panels (1) according to any of claims 1 to 10, wherein the first overhang (10) of the first building panel (1) covers at least part of the juxtaposed second building panel, and wherein the second overhang (11) of the first building panel (1) covers at least part of the superposed third building panel.

13. A process for manufacturing a building panel (1) as defined in any of claims 1 to 10, **characterized in that** said method comprises the steps of:
(a) preparing a construction plate (2) and a mesh structure (3) as defined in any one of claims 1 to 10;
(b) optionally applying a binder layer (4) onto said construction plate (2);
(c) positioning said mesh structure (3) onto the construction plate (2) such that a first overhang (10) and/or a second overhang (11) of the mesh structure (3) does not extend over the entire size of the construction plate (2); wherein the length (20) of the first recess (12) is equal to the width (21) of the second overhang (11) within a margin of +100% and -50%, and wherein the length (22) of the second recess (13) is equal to the width (23) of the first overhang (10) within a margin of +100% and -50%; and;
(d) optionally applying a binder layer (5) onto at least part of said mesh structure (3); thereby manufacturing a building panel (1);
wherein said method comprises at least one of steps (b) or (d).

14. The process according to claim 13, wherein a first binder layer (4) is applied prior to applying the mesh structure (3), while a second binder layer (5) is applied after applying the mesh structure (3).

15. A method for the modular construction of a building structure, comprising the steps of:
- providing a plurality of building panels (1) as defined in any of claims 1 to 10;
- arranging said building panels (1) in reciprocal contact with each other;
- covering juxtaposed and superposed panels with the first and second overhangs (10,11) of the adjacent building panels (1); and
- applying a binder layer onto the first and second overhangs (10,11) covering the juxtaposed and superposed panels, thereby construing a building structure.

## Patentansprüche

1. Baupaneel (1), umfassend eine Konstruktionsplatte (2) und eine Maschenstruktur (3), die mit einem Bindematerial (4, 5) an der Konstruktionsplatte (2) befestigt ist,
wobei die Maschenstruktur (3) eine Erweiterungsstruktur bereitstellt, die aus einem ersten Überhang (10) und einem zweiten Überhang (11) besteht und über zwei benachbarte Ränder der Konstruktionsplatte (2) hinausragt, wobei die Erweiterungsstruktur eine erste Aussparung (12) und eine zweite Aussparung (13) umfasst, die sich in einer oder beiden Extremitäten des ersten und/oder zweiten Überhangs (10, 11) befinden, so dass der erste Überhang (10) und/oder der zweite Überhang (11) sich nicht über die gesamte Größe der Konstruktionsplatte (2) erstreckt bzw. erstrecken, wobei die Länge (20) der ersten Aussparung (12) gleich der Breite (21) des zweiten Überhangs (11) innerhalb eines Spielraums von +100 % und -50 % ist, und wobei die Länge (22) der zweiten Aussparung (13) gleich der Breite (23) des ersten Überhangs (10) innerhalb eines Spielraums von +100 % und -50 % ist.

2. Baupaneel (1) nach Anspruch 1, wobei das Baupaneel (1) zwei Schichten aus Bindematerial umfasst, wobei eine erste Schicht aus Bindematerial (4) an der Konstruktionsplatte (2) befestigt ist, worauf die Maschenstruktur (3) positioniert ist, und eine zweite Schicht aus Bindematerial (5) mindestens einen Teil der Maschenstruktur (3) bedeckt.

3. Baupaneel (1) nach Anspruch 1 oder 2, wobei die Schicht aus Bindematerial (4, 5) einen oder mehrere Hohlräume (6) zum Aufbringen von Fixiermitteln umfasst, wobei möglicherweise die Maschenstruktur (3) die gleichen Hohlräume (6) umfasst.

4. Baupaneel (1) nach einem der Ansprüche 1 bis 3, wobei das Bindematerial ein viskoses Harz ist, das typischerweise in Konstruktionsarbeiten verwendet wird, vorzugsweise ausgewählt aus Zement, Mörtel, Putz, Polymerklebstoff, Polymerzement oder einer Mischung davon.

5. Baupaneel (1) nach einem der Ansprüche 1 bis 4, wobei die Maschenstruktur eine flexible Gitterstruktur ist, die typischerweise in Konstruktionsarbeiten verwendet wird und vorzugsweise aus einem metallischen, polymeren oder plastischen Material gefertigt ist und vorzugsweise ausgewählt ist aus Fiberglas, galvanisiertem Stahl oder rostfreiem Stahl.

6. Baupaneel (1) nach einem der Ansprüche 1 bis 5, wobei die Konstruktionsplatte (2) aus einem Isoliermaterial gefertigt ist, das typischerweise in Konstruktionsarbeiten verwendet wird, vorzugsweise ausgewählt aus einer Gruppe, die Polystyrol, Polyurethan, Kork, Schaumglas, Holzfaser, eine Mineralwolle oder Kombinationen davon umfasst.

7. Baupaneel (1) nach einem der Ansprüche 2 bis 6, wobei die erste Schicht aus Bindematerial (4) die gesamte Oberfläche der Konstruktionsplatte (2) im Wesentlichen bedeckt, und wobei die zweite Schicht des Bindematerials (5) nur einen Teil der Maschenstruktur (3) bedeckt, wobei die Fläche des Baupaneels, die frei von der zweiten Schicht des Bindematerials (5) ist, einem Band entlang der beiden benachbarten Ränder der Konstruktionsplatte (2) entspricht, wo keine Überhangmaschenstruktur positioniert ist.

8. Baupaneel nach Anspruch 7, wobei die Breite des Bands, das frei von der zweiten Schicht des Bindematerials (5) ist, gleich der Breite (21) des Überhangs (10, 11) innerhalb eines Spielraums von +100 % und -50 % ist, der auf der gegenüber liegenden Seite des Baupaneels (1) positioniert ist.

9. Baupaneel (1) nach einem der Ansprüche 1 bis 8, wobei die Konstruktionsplatte (2) in Draufsicht in einer im Wesentlichen rechteckigen Gestalt bereitgestellt wird.

10. Baupaneel (1) nach einem der Ansprüche 1 bis 9, wobei die erste Schicht des Bindematerials (4) und die zweite Schicht des Bindematerials (5) ähnliche Typen von Bindematerialien sind.

11. Verwendung des Baupaneels (1) nach einem der Ansprüche 1 bis 10 zur modularen Konstruktion.

12. Modulares Konstruktionssystem, umfassend drei oder mehr Baupaneele (1) gemäß einem der Ansprüche 1 bis 10, wobei der erste Überhang (10) des ersten Baupaneels (1) mindestens einen Teil des daneben gestellten zweiten Baupaneels bedeckt, und wobei der zweite Überhang (11) des ersten Baupaneels (1) mindestens einen Teil des darüber gelegten dritten Baupaneels bedeckt.

13. Verfahren zur Fertigung eines Baupaneels (1) nach einem der Ansprüche 1 bis 10, **dadurch gekennzeichnet, dass** das Verfahren die Schritte umfasst:
(a) Herstellen einer Konstruktionsplatte (2) und einer Maschenstruktur (3) gemäß einem der Ansprüche 1 bis 10;
(b) gegebenenfalls Aufbringen einer Bindeschicht (4) auf die Konstruktionsplatte (2);
(c) Positionieren der Maschenstruktur (3) auf der Konstruktionsplatte (2), so dass ein erster Überhang (10) und/oder ein zweiter Überhang (11) der Maschenstruktur (3) sich nicht über die gesamte Größe der Konstruktionsplatte (2) erstreckt bzw. erstrecken; wobei die Länge (20) der ersten Aussparung (12) gleich der Breite (21) des zweiten Überhangs (11) innerhalb eines Spielraums von +100 % und -50 % ist, und wobei die Länge (22) der zweiten Aussparung (13) gleich der Breite (23) des ersten Überhangs (10) innerhalb eines Spielraums von +100 % und -50 % ist; und
(d) gegebenenfalls Aufbringen einer Bindeschicht (5) auf mindestens einen Teil der Maschenstruktur (3); wodurch ein Baupaneel (1) gefertigt wird;
wobei das Verfahren mindestens einen der Schritte (b) oder (d) umfasst.

14. Verfahren nach Anspruch 13, wobei eine erste Bindeschicht (4) aufgebracht wird, bevor die Maschenstruktur (3) aufgebracht wird, während eine zweite Bindeschicht (5) aufgebracht wird, nachdem die Maschenstruktur (3) aufgebracht worden ist.

15. Verfahren zur modularen Konstruktion einer Baustruktur, umfassend die Schritte:
- Bereitstellen einer Vielzahl von Baupaneelen (1) gemäß einem der Ansprüche 1 bis 10;
- Anordnen der Baupaneele (1) in wechselseitigem Kontakt miteinander;
- Bedecken von daneben gestellten und übereinander gelegten Paneelen mit den ersten und zweiten Überhängen (10, 11) der benachbarten Baupaneele (1); und
- Aufbringen einer Bindeschicht auf den ersten und den zweiten Überhang (10, 11), der die daneben gestellten und übereinander gelegten Paneele bedeckt, wodurch eine Baustruktur konstruiert wird.

## Revendications

1. Panneau de construction (1) comprenant une plaque de construction (2) et une structure maillée (3) fixée à la plaque de construction (2) avec un matériau liant (4, 5)
la structure maillée (3) fournit une structure d'extension constituée d'un premier surplomb (10) et d'un second surplomb (11) faisant saillie au-delà de deux bords adjacents de ladite plaque de construction (2), ladite structure d'extension comprenant un premier évidement (12) et un second évidement (13) situés à l'une ou aux deux extrémités des premier et/ou second surplombs (10, 11), de telle sorte que le premier surplomb (10) et/ou le second surplomb (11) ne s'étend pas sur la taille entière de la plaque de construction (2), la longueur (20) du premier évidement (12) étant égale à la largeur (21) du second surplomb (11) dans une marge de +100 % et -50%, et la longueur (22) du second évidement (13) étant égale à la largeur (23) du premier surplomb (10) dans une marge de +100 % et -50 %.

2. Panneau de construction (1) selon la revendication 1, ledit panneau de construction (1) comprenant deux couches de matériau liant, une première couche de matériau liant (4) fixée à la plaque de construction (2) sur laquelle la structure maillée (3) est positionnée et une seconde couche de matériau liant (5) recouvrant au moins une partie de la structure maillée (3).

3. Panneau de construction (1) selon la revendication 1 ou 2, ladite couche de matériau liant (4, 5) comprenant une ou plusieurs cavités (6) pour appliquer des moyens de fixation, éventuellement la structure maillée (3) comprenant les mêmes cavités (6).

4. Panneau de construction (1) selon l'une quelconque des revendications 1 à 3, le matériau liant étant une résine visqueuse typiquement utilisée dans les travaux de construction, de préférence choisie parmi le ciment, le coulis de ciment, le plâtre, la colle polymère, le ciment polymère, ou un mélange de ceux-ci.

5. Panneau de construction (1) selon l'une quelconque des revendications 1 à 4, la structure maillée étant une structure en treillis flexible typiquement utilisée dans les travaux de construction, de préférence réalisée à partir d'un matériau métallique, polymère ou plastique et de préférence choisie parmi la fibre de verre, l'acier galvanisé ou l'acier inoxydable.

6. Panneau de construction (1) selon l'une quelconque des revendications 1 à 5, la plaque de construction (2) étant réalisée à partir d'un matériau isolant typiquement utilisé dans les travaux de construction, de préférence choisi dans un groupe comprenant le polystyrène, le polyuréthane, le liège, le verre mousse, la fibre de bois, une laine minérale, ou des combinaisons de ceux-ci.

7. Panneau de construction (1) selon l'une quelconque des revendications 2 à 6, ladite première couche de matériau liant (4) recouvrant essentiellement toute la surface de la plaque de construction (2) et la seconde couche de matériau liant (5) recouvrant seulement une partie de la structure maillée (3), la zone du panneau de construction dépourvue de la seconde couche de matériau liant (5) correspondant à une bande le long des deux bords adjacents de la plaque de construction (2) où aucune structure maillée en surplomb n'est positionnée.

8. Panneau de construction selon la revendication 7, la largeur de ladite bande dépourvue de la seconde couche de matériau liant (5) étant égale à la largeur (21) du surplomb (10, 11) dans une marge de +100 % et -50 % positionnée sur le côté opposé du panneau de construction (1).

9. Panneau de construction (1) selon l'une quelconque des revendications 1 à 8, ladite plaque de construction (2), en vue de dessus, présentant une forme sensiblement rectangulaire.

10. Panneau de construction (1) selon l'une quelconque des revendications 1 à 9, ladite première couche de matériau liant (4) et ladite seconde couche de matériau liant (5) étant des types de matériaux liants similaires.

11. Utilisation du panneau de construction (1) selon l'une quelconque des revendications 1 à 10, pour la construction modulaire.

12. Système de construction modulaire comprenant trois ou plus de trois panneaux de construction (1) selon l'une quelconque des revendications 1 à 10, le premier surplomb (10) du premier panneau de construction (1) recouvrant au moins une partie du deuxième panneau de construction juxtaposé, et le second surplomb (11) du premier panneau de construction (1) recouvrant au moins une partie du troisième panneau de construction superposé.

13. Procédé de fabrication d'un panneau de construction (1) selon l'une quelconque des revendications 1 à 10, **caractérisé en ce que** ledit procédé comprend les étapes de :
(a) préparation d'une plaque de construction (2) et d'une structure maillée (3) telles que définies selon l'une quelconque des revendications 1 à 10 ;
(b) application éventuellement d'une couche de liant (4) sur ladite plaque de construction (2) ;
(c) positionnement de ladite structure maillée (3) sur la plaque de construction (2) de telle sorte qu'un premier surplomb (10) et/ou un second surplomb (11) de la structure maillée (3) ne s'étend pas sur la totalité de la taille de la plaque de construction (2) ; la longueur (20) du premier évidement (12) étant égale à la largeur (21) du second surplomb (11) dans une marge de +100 % et -50%, et la longueur (22) du second évidement (13) étant égale à la largeur (23) du premier surplomb (10) dans une marge de +100 % et -50 % ; et ;
(d) l'application éventuellement d'une couche de liant (5) sur au moins une partie de ladite structure maillée (3) ; fabriquant ainsi un panneau de construction (1) ;
ledit procédé comprenant au moins une des étapes (b) ou (d).

14. Procédé selon la revendication 13, une première couche de liant (4) étant appliquée avant l'application de la structure maillée (3), tandis qu'une seconde couche de liant (5) est appliquée après l'application de la structure maillée (3).

15. Procédé pour la construction modulaire d'une structure de bâtiment, comprenant les étapes de :
- fourniture d'une pluralité de panneaux de construction (1) tels que définis selon l'une quelconque des revendications 1 à 10 ;
- agencement desdits panneaux de construction (1) en contact réciproque les uns avec les autres ;
- recouvrement de panneaux juxtaposés et superposés avec les premier et second surplombs (10, 11) des panneaux de construction adjacents (1) ; et
- application d'une couche de liant sur les premier et second surplombs (10, 11) recouvrant les panneaux juxtaposés et superposés, construisant ainsi une structure de bâtiment.
